**Europäisches Patentamt**

**European Patent Office**

**Office européen des brevets**

(19)

(11) Veröffentlichungsnummer: **0 144 073 B1**

# (12) EUROPÄISCHE PATENTSCHRIFT

(45) Veröffentlichungstag der Patentschrift: **06.11.91**

(51) Int. Cl.⁵: **B23B 27/08**, B23B 27/16

(21) Anmeldenummer: **84114452.0**

(22) Anmeldetag: **29.11.84**

(54) **Schneidwerkzeug.**

(30) Priorität: **07.12.83 DE 3344233**

(43) Veröffentlichungstag der Anmeldung:
**12.06.85 Patentblatt 85/24**

(45) Bekanntmachung des Hinweises auf die
Patenterteilung:
**06.11.91 Patentblatt 91/45**

(84) Benannte Vertragsstaaten:
**AT BE CH FR GB IT LI NL SE**

(56) Entgegenhaltungen:
**DE-A- 1 945 256**
**DE-A- 2 201 237**
**DE-A- 2 637 757**
**DE-B- 1 223 230**
**FR-A- 2 203 688**

(73) Patentinhaber: **HERRLI AG**
**Industriezone**
**CH-3210 Kerzers(CH)**

(72) Erfinder: **Salm, Franz**
**Eigenweg 46**
**CH-4107 Ettingen(CH)**
Erfinder: **Zaengerle, Eduard**
**Alte Landstrasse 104**
**CH-8804 AU(CH)**
Erfinder: **Muriset, Jean-Francois**
**Oelegasse 1024**
**CH-3210 Kerzers(CH)**

(74) Vertreter: **Patentanwälte RUFF, BEIER und**
**SCHÖNDORF**
**Neckarstrasse 50**
**W-7000 Stuttgart 1(DE)**

EP 0 144 073 B1

**Beschreibung**

Die Erfindung betrifft einen Schneidplattenhalter nach dem Oberbegriff des Patentanspruchs 1.

Ein solches Schneidwerkzeug ist aus der FR-A-22 03 688 bekannt. Die insgesamt L-förmige Schneidplatte hat an ihrem Grundkörper Ausrichtanlageflächen, die unter einem vom rechten Winkel abweichenden Winkel zur Schneidflächenebene liegen. Die Seitenkantenflächen, die die Schneidvorsprünge an den Außenseiten des L begrenzt, haben einen Freischnittwinkel, der in der anderen Richtung von der Rechtwinkligkeit abweicht. Die Bearbeitung dieser Schneidplatten ist sehr aufwendig, da sie wegen der unterschiedlichen Winkelstellungen in mehreren nacheinanderfolgenden Arbeitsgängen mit unterschiedlichen Schleifscheiben und teilweise auch in mehreren Aufspanungen erfolgen muß. Außerdem muß jede Schneidplatte einzeln bearbeitet werden. Ferner leidet die Genauigkeit und insbesondere die Reproduzierbarkeit der Maßeinstellung unter diesen zahlreichen Bearbeitungsvorgängen und der Möglichkeit, daß sich auch Winkelfehler auf die Genauigkeit auswirken.

Durch die DE-B-1 223 230 sind Schneidwerkzeuge bekanntgeworden, deren Schneidplatten jeweils drei Schneidvorsprünge aufweisen, wobei die ausrichtende Anlage am Schneidplattenhalter jedoch nicht mit Außenkantenflächen des Grundkörpers, sondern ausschließlich mit Seitenkantenflächen von Schneidvorsprüngen erfolgt. Dies hat den Nachteil, daß an diesen Seitenkantenflächen festhaftende Schneidablagerungen zu Fehlern der Ausrichtung führen.

Der Erfindung liegt die Aufgabe zugrunde, ein Schneidwerkzeug der genannten Art zu schaffen, dessen Schneidplatte bei einfacher Ausbildung, hoher Festigkeit und größtmöglicher Schnitt- bzw. Spantiefe eine sehr geringe räumliche Ausdehnung aufweist. Die Schneidplatte soll rationell mit großer Maßgenauigkeit, insbesondere bezogen auf die Positionier- und Wendegenauigkeit, hergestellt werden können.

Diese Aufgabe wird gemäß der Erfindung durch den Patentanspruch 1 gelöst. Dadurch wird einerseits die Kompaktheit der Schneidplatte noch weiter verbessert und andererseits erreicht, daß diese Seitenfläche und die zugehörige Anlagefläche des Grundkörpers in einem Durchgang, beispielsweise durch Schleifen, genau und rationell bearbeitet werden können.

Je nach Einsatzzweck können die Vorsprünge unter einem Winkel zwischen etwa 60° und 120° zueinander liegen. Das breiteste und vielseitigste Anwendungsspektrum für die Schneidplatte ergibt sich jedoch, wenn die Vorsprünge unter einem Winkel von genau 90° zueinander liegen, da dann die Schneidplatte in Längsrichtung des jeweiligen Vorsprunges eine minimale Ausdehnung aufweisen kann.

Zur sicheren, starren und vibrationsfreien Abstützung der Schneidplatte am Werkzeughalter ist es ferner vorteilhaft, wenn die durch die Kantenflächen gebildeten Anlageflächen - in Draufsicht auf mindestens eine Schneide - zueinander etwa unter gleichen Winkeln wie die Vorsprünge und/oder parallel zu dessen Mittelebenen liegen.

Bei einer bevorzugten Ausführung der Erfindung geht - in Draufsicht auf die jeweilige Schneide- - die äußere Seitenfläche des Vorsprunges im wesentlichen annähernd geradlinig in die zugehörige Kantenfläche des Grundkörpers über, wobei sie vorzugsweise mit dieser annähernd in einer Ebene liegt.

Um insbesondere bei Herstellung von Einstichen seitliche Freiwinkel am Vorsprung zu erhalten, kann der Vorsprung auch - in Draufsicht auf die jeweilige Schneide - zu seinem äußeren Ende durch schräge Ausbildung seiner inneren und/oder seiner äußeren Seitenfläche verbreitert sein. Liegt dabei nur die innere Seitenfläche schräg zu der in die äußere Seitenfläche übergehenden Kantenfläche des Grundkörpers, so kann der Freiwinkel an der äußeren Seitenfläche dadurch erreicht werden, daß die Schneidplatte unter einem entsprechenden Winkel von wenigen Grad schräg am Schneidplattenhalter angeordnet oder dieser entsprechend schräg zur Drehachse ausgerichtet ist. Die äußere Seitenfläche kann aber auch unter einem stumpfen Winkel von geringfügig weniger als 180° in die anschließende Kantenfläche des Grundkörpers übergehen, so daß dann auch bei paralleler Ausrichtung des nicht im Schneideinsatz stehenden Vorsprunges zum Schneidplattenhalter und bei zur Drehachse paralleler Ausrichtung der Längsachse des Schneidplattenhalters selbst, ein Freischnitt an der äußeren Seitenfläche des im Schneidsatz stehenden Vorsprunges erzielt wird.

Zur weiteren Verbesserung der Abstützung der Schneidplatte am Schneidplattenhalter sind der jeweiligen Schneide als Anlageflächen eine quer, insbesondere rechtwinklig, zur Mittelebene des zugehörigen Vorsprunges liegende Kantenfläche auf der von diesem Vorsprung abgekehrten Seite des Grundkörpers und eine zu dieser Kantenfläche quer, insbesondere etwa rechtwinklig, liegende weitere Kantenfläche zugeordnet, welch letztere benachbart zu der inneren Seitenfläche des Vorsprunges im Bereich von dessen Basis liegt und zur selben Seite weist. Dadurch werden sowohl die in Längsrichtung des Vorsprunges als auch die parallel zur Drehachse wirkenden Schnittkräfte bei räumlich kleiner Ausbildung der Schneidplatte gut aufgefangen. Dies wird, insbesondere im Hinblick auf die in Längsrichtung des Vorsprunges wirkenden Schnittkräfte, noch weiter verbessert, wenn - in Ansicht parallel zur Plattenebene auf die Endfläche des Vorsprunges - die jeweilige Schneide im wesentlichen innerhalb der Projektion der von ihr abgekehrt liegenden Anlagefläche liegt.

Der Grundkörper erhält eine einfache, beispielsweise im wesentlichen quadratische Grundform, wenn die beiden benachbart zu den inneren Seitenflächen der Vorsprünge liegenden Anlageflächen und/oder die beiden in die äußeren Seitenflächen der Vorsprünge übergehenden Anlageflächen unmittelbar winklig ineinander übergehen.

Zur weiteren Erhöhung der maximalen Schnittkräfte, die die Wende-Schneidplatte aufnehmen kann, und damit zur Erhöhung der Spantiefe, der Schnittgeschwindigkeit, der Vorschubgeschwindigkeit und der Einstichtiefe, in welcher mit der Schneidplatte gearbeitet werden kann, geht der jeweilige Vorsprung über einen verbreiterten Fußabschnitt in den Grundkörper über, wobei vorzugsweise dieser Fußabschnitt ausschließlich über die innere Seitenfläche des übrigen Vorsprunges vorsteht. Dadurch können die am Ende des Vorsprunges auf dessen Schneide einwirkenden Kräfte großflächig in den am Schneidplattenhalter abgestützten Grundkörper eingeleitet werden. Ferner ist es dadurch möglich, zur Erzielung eines guten Spanflusses und ohne nachteilige Querschnittsschwächung des Vorsprunges, eine Spannut bis in diesen Fußabschnitt zu führen.

Nach einem weiteren bevorzugten Merkmal der Erfindung ist im Grundkörper eine zur Plattenebene etwa rechtwinklige Durchgangsbohrung für eine Spannschraube oder dgl. des Schneidplattenhalters vorgesehen, wobei die Durchgangsbohrung vorzugsweise an beiden Plattenseiten liegende, sich spitzwinklig konisch zur Plattenmitte verengende Bohrungsabschnitte aufweist. Mit dieser Spannschraube kann die Schneidplatte ohne jegliche weitere Befestigungsmittel sicher und starr am Schneidplattenhalter befestigt werden. Liegt die Mittelachse dieser Durchgangsbohrung von den durch die Kantenflächen gebildeten Anlageflächen des Grundkörpers geringfügig weiter entfernt als die beispielsweise durch eine Gewindebohrung gebildete Aufnahmebohrung für die Schraube im Schneidplattenhalter von den zugehörigen Gegenflächen für diese Anlageflächen entfernt ist, so sorgt die Spannschraube beim Festziehen infolge dieser Exzentrizität gleichzeitig für eine Anpressung der genannten Anlageflächen der Schneidplatte an die Gegenflächen des Schneidplattenhalters und damit selbsttätig für eine exakte Ausrichtung der Schneidplatte gegenüber dem Werkzeughalter.

Um bei sehr kompakter Ausbildung der Schneidplatte größtmögliche Abstützflächen für die Spannschraube und große Kantenflächen als Anlageflächen zu erzielen, liegen die zu den inneren Seitenflächen der Vorsprünge benachbarten Anlageflächen und/oder die von den Schneiden abgekehrten Begrenzungskanten von Spannuten annähernd tangential zum größten Umfang der Durchgangsbohrung. Ferner können diese Anlageflächen etwa im Bereich der annähernd rechtwinklig zur jeweiligen Anlagefläche liegenden Axialebene der Durchgangsbohrung in den verbreiterten Fußabschnitt des zugehörigen Vorsprunges übergehen.

In weiterer Ausgestaltung der Erfindung steht der Vorsprung um ein Maß über den Grundkörper vor, das etwa gleich oder kleiner als die Hälfte des Kantenmaßes des vorzugsweise quadratische Grundform aufweisenden Grundkörpers ist. Die größte Breite des Vorsprunges liegt zweckmäßig etwa in der Größenordnung von der Hälfte der in gleicher Richtung gemessenen Breite des Grundkörpers, wobei vorzugsweise das äußere Ende des Vorsprunges demgegenüber schmaler ist.

Die erfindungsgemäße Wende-Schneidplatte eignet sich außer zum Innendrehen auch vielseitig für Außendreharbeiten, wobei sie insbesondere in diesem Fall auch so am Werkzeughalter angeordnet werden kann, daß der im Schneideinsatz stehende Vorsprung etwa in Längsrichtung der Längsachse des Werkzeughalters ausgerichtet ist. Sowohl die Wende-Schneidplatte wie auch der zu dem zugehörigen Schneidwerkzeug gehörende Werkzeughalter können bei hoher Genauigkeit einfach und mit geringen Kosten hergestellt werden.

Die Erfindung wird im folgenden mit weiteren Einzelheiten anhand der in den Zeichnungen dargestellten Ausführungsbeispiele näher erläutert.

Es sind dargestellt in:

Fig. 1    das Arbeitsende eines mit einer erfindungsgemäßen Wende-Schneidplatte versehenen Schneidwerkzeuges in Draufsicht,

Fig. 2    das Schneidwerkzeug gemäß Fig. 1 in teilweise geschnittener Ansicht auf die Endfläche,

Fig. 3    eine weitere Ausführungsform eines Schneidwerkzeuges in einer Darstellung entsprechend Fig. 1 und

Fig. 4    die Schneidplatte des Werkzeuges gemäß Fig. 3 in Ansicht von rechts.

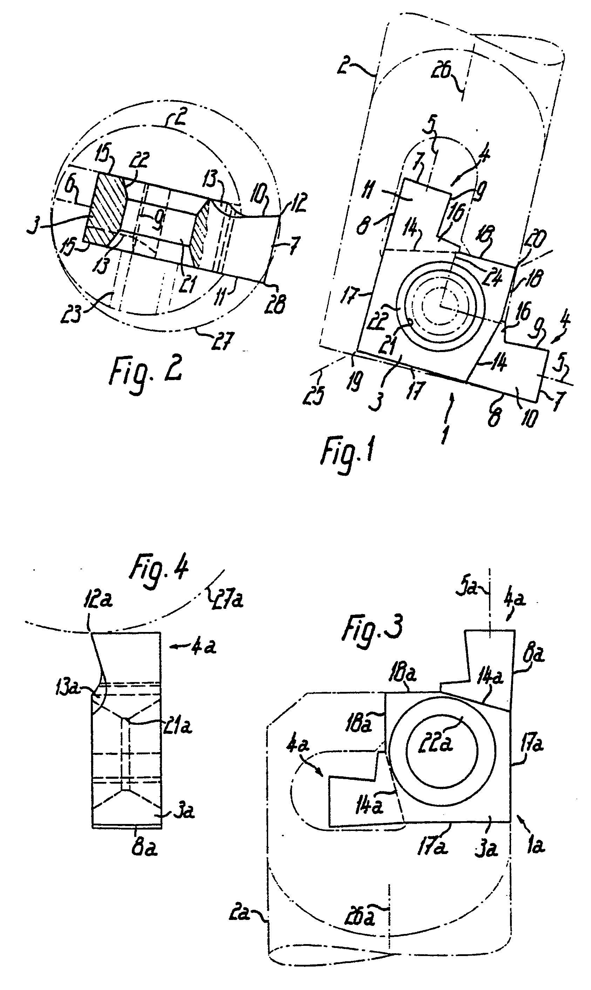

Wie die Figuren 1 und 2 zeigen, ist eine erfindungsgemäße, in ausgezogenen Linien dargestellte Wende-Schneidplatte 1 an einem strichpunktiert angedeuteten Schneidplattenhalater 2 befestigt, der im dargestellten Ausführungsbeispiel als Klemmhalter, d.h. als Werkzeughalter, ausgebildet ist, an welchem die Schneidplatte 1 durch die Klemmung bzw. Spannung befestigt ist.

Die Schneidplatte 1 weist einen in seiner geometrischen Grundform annähernd quadratischen, d.h. auch rechtwinkligen, im wesentlichen massiven Grundkörper 3 auf, dessen Dicke mindestens etwa einem Drittel, vorzugsweise etwa der Hälfte seines Kantenmaßes entspricht. An zwei im Winkel ineinander übergehenden Außenkanten sowie im Bereich der voneinander abgekehrten Enden dieser beiden Außenkanten des Grundkörpers 3 sind an diesem zwei Schneidvorsprünge 4 vorgesehen, deren zur Mittelebene 6 des plattenförmigen Grundkörpers 3 rechtwinklige Mittelebenen 5 unter einem Winkel von im dargstellten Ausführungsbeispiel 90° zueinander liegen. An allen übrigen Kantenseiten ist der Grundkörper 3 von Vorsprüngen frei und im wesentlichen glattflächig ausgebildet, derart, daß ausschließlich zwei winklig zueinander liegende Vorsprünge vorgesehen sind.

Jeder Vorsprung 4 weist eine zur Mittelebene 6 quer bzw. etwa rechtwinklig liegende Endfläche 7, eine in diese übergehende äußere Seitenfläche 8, eine ebenfalls in die Endfläche 7 übergehende innere Seitenfläche 9, eine an der einen Oberfläche des Grundkörpers 3 liegende Rückenfläche 10 und eine an der davon abgekehrten Plattenseite liegende Basisfläche 11 auf. Die Anordnung der Flächen 7 bis 9 wird, insbesondere wenn die Schneidplatte zum Profildrehen eingesetzt werden soll, von dem gewünschten Profil bestimmt; im dargestellten Ausführungsbeispiel eignet sich die Schneidplatte insbesondere zum Herstellen von Einstichen mit rechteckigem Querschnitt. An der Verschneidung der Endfläche 7 mit der Rückenfläche 10 bildet der Vorsprung 4 eine Schneide 12, wobei die Winkel der diese Schneidkante bildenden Flächen an die Erfordernisse des jeweils zu bearbeitenden Werkstoffes angepaßt sind. Die Enden der Schneide 12 sind durch die Seitenflächen 8, 9 definiert, und die Endfläche 7 des Vorsprunges 4 bildet die Schneidenbrustfläche. Die Rückenfläche 10 geht in Richtung zum Grundkörper 3 tangential in eine konkave Spanleitfläche 13 über, die von der Rückenfläche 10 zum Grundkörper 3 hin ansteigt und deren von der Schneide 7 abgekehrte Begrenzungskante mit 14 bezeichnet ist. Diese Begrenzungskante 14 liegt in der zugehörigen ebenen Oberfläche 15 des Grundkörpers 3, die parallel zur Mittelebene 6 vorgesehen ist, derart, daß beide Oberflächen 15 des Grundkörpers 3 parallel zueinander liegen. Auch jede Schneide 12 liegt etwa in der Ebene einer dieser Oberflächen 15, während die Basisfläche 11 jedes Vorsprunges 4 ununterbrochen ebenengleich in die andere Oberfläche 15 übergeht.

In Ansicht auf die jeweilige Platten-Oberfläche 15 geht jeder Vorsprung 4 über einen verbreiterten Fußabschnitt 16 in den Grundkörper 3 über, wobei die Breite dieses Fußabschnittes 16 etwa der Hälfte eines Kantenmaßes der Oberflächen 15 des Grundkörpers 3 entspricht während seine Erstreckung in Längsrichtung des Vorsprunges 4 etwa gleich einem Sechstel der Gesamtlänge des Vorsprunges 4 ist.

Als der Ausrichtung und Abstützung gegenüber dem Schneidplattenhalter 2 dienende Anlageflächen 17, 18 sind Kantenflächen des Grundkörpers 3 vorgesehen, die rechtwinklig zu dessen Mittelebene 6 stehen und eben von einer Oberfläche 15 zur anderen durchgehen. Die beiden äußeren Anlageflächen 17 bilden ebene Fortsetzungen der äußeren Seitenflächen 8 der Vorsprünge 4, liegen rechtwinklig zueinander und gehen in einer Eckkante 19 des Grundkörpers ineinander über.

Die zu den inneren Seitenflächen 9 der Vorsprünge 4 benachbarten Anlageflächen 18 schließen an den jeweils zugehörigen Fußabschnitt 16 an, liegen quer bzw. annähernd rechtwinklig zur jeweils zugehörigen Seitenfläche 9 sowie rechtwinklig zur Mittelebene 6 und gehen ebenfalls eben von einer Oberfläche 15 zur anderen Oberfläche durch; diese Anlageflächen 18 gehen in einer Eckkante 20 des Grundkörpers 3 ineinander über, die der Eckkante 19 diagonal gegenüberliegt. Jeweils zwei im Winkel zueinander liegende Anlageflächen 7, 18 dienen zur Abstützung der Wende-Schneidplatte 1 an Gegenflächen des entsprechend gestalteten Schneidplattenhalters; als dritte, rechtwinklig dazu liegende Anlagefläche ist jeweils die von der eingesetzten Schneide 12 abgekehrte Oberfläche 15 des Grundkörpers 3 vorgesehen, der eine entpsrechende Gegenfläche am Werkzeughalter zugeordnet ist. Im dargestellten Ausführungsbeispiel weist der Schneidplattenhalter 2 im wesentlichen einen Rundstab auf, der am Arbeitsende mit einer zu seiner Mittelachse parallelen Abflachung versehen ist, derart, daß die Dicke des Schneidplattenhalters im Bereich der Abflachung etwa der Hälfte des Durchmessers des Rundstabes zuzüglich der Hälfte der Dicke des Grundkörpers 3 der Wende-Schneidplatte 1 entspricht. In diese Abflachung ist eine an die Außenkontur der Wende-Schneidplattee 1 angepaßte Vertiefung eingearbeitet, deren Bodenfläche die Gegenfläche für die abzustützende Oberfläche 15 bildet und von der zwei seitliche Begrenzungsflächen so angeordnet sind, daß sie die Gegenflächen für die beiden jeweils im Einsatz befindlichen Anlageflächen 17, 18 des Grundkörpers 3 bilden. Die Anordnung ist dabei so getroffen, daß - bezogen auf den für den Schneideinsatz bestimmten Vorsprung 4 - die von diesem abgekehrte und rechtwinklig zu seiner Mittelebene 5 liegende Anlagefläche 17 sowie die rechtwinklig dazu liegende, zum anderen Vorsprung 4 benachbarte Anlagefläche 18 zur Abstützung dient.

Im Grundkörper 3 ist eine Durchgangsbohrung 21 vorgesehen, deren Mittelachse rechtwinklig zur Mittelebene 6 steht und in der Winkelhalbierenden zwischen den beiden Mittelebenen 5 der Vorsprünge 4 liegt. Diese Durchgangsbohrung 21, die im mittleren Bereich der Dicke des Grundköreprs 3 einen zylindrischen engsten Abschnitt aufweist, ist an beiden Enden mit sich nach außen konisch erweiternden Bohrungsabschnitten 22 versehen, die jeweils bis zur zugehörigen Oberfläche 15 reichen. Die Durchgangsbohrung 21 ist für die Aufnahme einer nicht näher dargestellten Spannschraube vorgesehen, deren entsprechend kegelstumpfförmiger Kopf an dem jeweils bei der freien Oberfläche 15 des Grundkörpers 3 liegenden Bohrungsabschnitt 22 anliegt und deren Gewindeschaft in eine Gewindebohrung 23 im Schneidplattenhalter 2 eingreift, welche die Bodenfläche der Ausnehmung für die Aufnahme des Grundkörpers 3 durchsetzt. Im dargestellten Ausführungsbeispiel liegen die seitlichen, an die Anlageflächen 18 anschließenden Begrenzungen der Fußabschnitte 16 etwa in zwei zueinander rechtwinkligen Axialebenen 20 der Durchgangsbohrungen 21, wobei die Erstreckung des jeweiligen Fußabschnittes 16 von dieser Begrenzung in Längsrichtung des zugehörigen Vorsprunges 4 zu dessen innerer Seitenfläche 9 geringfügig zunimmt. Ferner geht von dieser Begrenzung die Begrenzungskante 14 der zugehörigen Spanleitfläche 13 aus. Die Begrenzungskante 14 liegt dabei derart schräg zur Mittelebene 5, daß ihr Abstand von der Endfläche 7 in Richtung zur äußeren Seitenfläche 8 zunimmt und somit die Spanleitfläche 13 bis in den Grundkörper 3 reicht.

Die Wende-Schneidplatte 1 ist faltsymmetrisch zu einer Faltachse 25 ausgebildet, die in der Winkelhalbierenden zwischen den Schneidvorsprüngen 4 bzw. zwischen deren Mittelebenen 5 sowie der Mittelebene 6 liegt.

Daher liegt eine Schneide 7 mit der zugehörigen Rückenfläche 10 und der zugehörigen Spanleitfläche 13 an einer Oberfläche 15 und die Schneide 7 nebst Rückenfläche 10 und Spanleitfläche 13 des anderen Schneidvorsprunges 4 an der anderen Oberfläche 15 der Schneidplatte. Durch Wenden der Schneidplatte 1 um die Faltachse 25 wird jeweils der andere Schneidvorsprung 4 in seine für den Schneideinsatz bestimmte Stellung gebracht, in welcher er genau dieselbe maßhaltige Lage zum Schneidplattenhalter 2 einnimmt wie zuvor der andere Vorsprung.

Bei dem Schneidwerkzeug nach den Figuren 1 und 2 ist die Schneidplatte 1 am Schneidplattenhalter 2 derart angeordnet, daß der für den Schneideinsatz bestimmte Schneidvorsprung 4 quer bzw. nahezu rechtwinklig zur Mittelachse 26 des Schneidplattenhalters 2 über dessen Peripherie vorsteht, während der andere Schneidvorsprung 4 etwa in Längsrichtung des Schneidplattenhalters 6 orientiert ist und seine Schneide geschützt von der Bodenfläche der Ausnehmung im Schneidhalter abgedeckt ist. Damit die äußere Seitenfläche 8 des für den Schneideinsatz bestimmten Schneidvorsprunges 4 einen Freiwinkel gegenüber der Drehachse einnimmt, ist die Schneidplatte 1 durch entsprechende Anordnung der Gegenflächen für die Anlageflächen 17, 18 unter einem Winkel von wenigen Grad geringfügig schräg gegenüber dem Schneidplattenhalter 2 gestellt. Durch die erfindungsgemäße Ausbildung ergibt sich ein sehr kleiner kleinster Durchmesser, auf welchem mit dem Schneidwerkzeug noch Innendreharbeiten ausgeführt werden können. In Figur 2 ist dieser kleinste Durchmesser strich-doppelpunktiert angedeutet; damit auf diesem Innendurchmesser gearbeitet werden kann, muß lediglich der Schneidvorsprung 4 im Bereich der von der Schneide 12 abgekehrten Kante 28 durch Schleifen oder dergleichen entsprechend abgenommen werden. Es ist denkbar, den Durchmesser 27 noch dadurch zu verkleinern, daß der Querschnitt des Schneidplattenhalters 2 benachbart zur wirksamen Anlagefläche 17 reduziert wird.

Das Werkzeug gemäß den Figuren 1 und 2 ist außer für Innendreh-Arbeiten auch für Außendreh-Arbeiten geeignet. Für letztere und zur Herstellung stirnseitiger Einstiche ist jedoch besonders eine Ausbildung gemäß den Figuren 3 und 4 vorteilhaft. In den Figuren 3 und 4 sind für einander entsprechende Teile die gleichen Bezugszeichen wie in den Figuren 1 und 2, jedoch mit dem Index "a" verwendet. Wie Figur 3 zeigt, liegen die Begrenzungskanten 14a der Spanleitflächen 13a sowie die Anlageflächen 18a in Ansicht auf die Schneidplatte annähernd tangential zum größten Durchmesser der Bohrungsabschnitte 22a, derart, daß die Mittelachse der Durchgangsbohrung 21a geringfügig näher bei den Anlageflächen 18a als bei den Anlageflächen 17a liegt. Die äußeren Seitenflächen 8a der Vorsprünge 4a gehen jeweils unter einem stumpfen Winkel von geringfügig weniger als 180° in die benachbarte Anlagefläche 17a über. Dadurch ergibt sich an der äußeren Seitenfläche 8a des für den Schneideinsatz bestimmten Schneidvorsprunges 4a auch dann ein Freiwinkel, wenn die Schneidplatte 1a so ausgerichtet ist, daß die Mittelebene 5a dieses Vorsprunges 4a rechtwinklig zur zu bearbeitenden Fläche steht. Im dargestellten Ausführungsbeispiel sind die Gegenflächen für die jeweils wirksamen Anlageflächen 17a, 18a der Schneidplatte 1a am Schneidplattenhalter 2a derart angeordnet, daß der für den Schneideinsatz bestimmte Schneidvorsprung 4a etwa parallel zur Mittelachse 26a ausgerichtet ist und über dessen Endfläche vorsteht.

## Patentansprüche

1. Schneidwerkzeug mit Schneidplattenhalter (2; 2a) und Wende-Schneidplatte (1; 1a), die zum wahlweisen gleich ausgerichteten Schneideinsatz zweier Schneidvorsprünge (4; 4a) in gegenüber dem Schneidplattenhalter (2; 2a) umgesetzten Schneidlagen vorgesehen ist und einen Grundkörper (3; 3a) mit Plattenflachseiten (15) aufweist, der an Außenkantenflächen im Winkel zueinander liegende Ausrichtanlageflächen (17, 18; 17a, 18a) zur Ausrichtung am Schneidplattenhalter (2; 2a) bildet und mit den im Winkel zueinander liegenden, in Ansicht auf die Plattenflachseiten (15) vorstehenden Schneidvorsprüngen (4; 4a) versehen ist, welche jeweils eine innere Seitenkantenfläche (9) und eine äußere, in Längsrichtung an die jeweils zugehörige Ausrichtanlagefläche (17; 17a) des Grundkörpers (3; 3a) anschließende Seitenkantenfläche (8; 8a) sowie an ihren Enden liegende Schneiden (12) aufweisen, dadurch gekennzeichnet, daß die äußere Seitenkantenfläche (8; 8a) des jeweiligen der wenigstens zwei Schneidvorsprünge (4; 4a) mit der zugehörigen Ausrichtanlagefläche (17) des Grundkörpers (3; 3a) eine durchgehende Bearbeitungsfläche bildet und die Ausrichtanlageflächen (17, 18; 17a, 18a) rechtwinklig zu den Plattenflachseiten (15) bzw. der Plattenmittelebene (6), d.h. der Symmetrieebene zwischen den Plattenflachseiten (15) des Grundkörpers (3), stehen und vorzugsweise zwischen beiden Plattenflachseiten (15) eben durchgehen.

2. Schneidwerkzeug nach Anspruch 1, dadurch gekennzeichnet, daß - in Ansicht auf die Plattenflachseiten (15) des Grundkörpers (3) - die äußere Seitenkantenfläche (8) des Schneidvorsprunges (4) im wesentlichen annähernd geradlinig in die zugehörige Ausrichtanlagefläche (17) des Grundkörpers (3) übergeht, insbesondere mit dieser annähernd in einer Ebene liegt.

3. Schneidwerkzeug nach Anspruch 1 oder 2, dadurch gekennzeichnet, daß die Endflächen (7) der Schneidvorsprünge (4) rechtwinklig zur Plattenmittelebene (6) bzw. zu den Plattenflachseiten (15) stehen.

4. Schneidwerkzeug nach einem der vorhergehenden Ansprüche, dadurch gekennzeichnet, daß der Schneidvorsprung (4; 4a) - in Ansicht auf die Plattenflachseiten (15) des Grundkörpers (3; 3a) - zu seinem äußeren Ende durch schräge Ausbildung seiner inneren und/oder seiner äußeren Seitenkantenfläche (8, 8a; 9) verbreitert ist, wobei vorzugsweise die äußere Seitenkantenfläche (8a) unter einem stumpfen Winkel von geringfügig weniger als 180° in die anschließende Ausrichtanlagefläche (17a) des Grundkörpers (3a) übergeht und insbesondere die Breite des Schneidvorsprunges (4a) an seinem äußeren Ende schmaler als die Hälfte der in gleicher Richtung gemessenen Breite des Grundkörpers (3a) ist.

5. Schneidwerkzeug nach einem der vorhergehenden Ansprüche, dadurch gekennzeichnet, daß der jeweiligen Schneide (12) als Ausrichtanlageflächen (17, 17a; 18, 18a) eine quer, insbesondere rechtwinklig zur Mittelebene (5; 5a) des zugehörigen Schneidvorsprunges (4; 4a) liegende Außenkantenfläche auf der von diesem Schneidvorsprung (4; 4a) abgekehrten Seite des Grundkörpers (3; 3a) und eine zu dieser Außenkantenfläche quer, insbesondere etwa rechtwinklig, liegende weitere Außenkantenfläche zugeordnet sind, welch letztere benachbart zur inneren Seitenkantenfläche (9) des Schneidvorsprunges (4; 4a) im Bereich von dessen Basis liegt.

6. Schneidwerkzeug nach einem der vorhergehenden Ansprüche, dadurch gekennzeichnet, daß der jeweilige Schneidvorsprung (4; 4a) über einen verbreiterten Fußabschnitt (16) in den Grundkörper (3; 3a) übergeht und daß vorzugsweise dieser Fußabschnitt (16) ausschließlich über die innere Seitenkantenfläche (9) des übrigen Schneidvorsprunges (4; 4a) vorsteht und/oder eine Spanleitfläche (13) bis in diesen Fußabschnitt (16) geführt ist.

7. Schneidwerkzeug nach einem der vorhergehenden Ansprüche, dadurch gekennzeichnet, daß im Grundkörper (3; 3a) eine zur Plattenmittelebene (6) etwa rechtwinklige Durchgangsbohrung (21; 21a) für eine Schneidplattenhalter-Spannschraube oder dgl. vorgesehen ist und daß die Durchgangsbohrung (21; 21a) vorzugsweise an beiden Plattenflachseiten (15) liegende, sich spitzwinklig konisch zur Plattenmittelebene (6) des Grundkörpers (3) verengende Bohrungsabschnitte (22; 22a) aufweist.

8. Schneidwerkzeug nach Anspruch 7, dadurch gekennzeichnet, daß die zu den inneren Seitenkantenflächen (9) der Schneidvorsprünge (4; 4a) benachbarten Ausrichtanlageflächen (18; 18a) und/oder die von den Schneiden (12) abgekehrten Begrenzungskanten (14; 14a) der Spanleitflächen (13) annähernd tangential zum größten Umfang der Durchgangsbohrung (21; 21a) liegen und/oder daß diese Ausrichtanlageflächen (18; 18a) etwa im Bereich der annähernd rechtwinklig zur jeweiligen Ausrichtanlagefläche (18; 18a) liegenden Axialebene (24) der Durchgangsbohrung (21) in den verbreiterten Fußabschnitt (16) des zugehörigen Schneidvorsprunges (4; 4a) übergehen.

9. Schneidwerkzeug nach einem der vorhergehenden Ansprüche, dadurch gekennzeichnet, daß die Schneidvorsprünge (4; 4a) unter einem Winkel zwischen etwa 60° und 120°, insbesondere von etwa 90°, zueinander liegen und daß der Grundkörper (3; 3a) vorzugsweise quadratische Grundform aufweist.

10. Schneidwerkzeug nach einem der vorhergehenden Ansprüche, dadurch gekennzeichnet, daß die Schneidplatte (1; 1a) an dem Schneidplattenhalter (2; 2a) mit in drei Raumebenen liegenden Justierflächen für die Abstützung der Ausrichtanlageflächen (17, 18; 17a, 18a) des Grundkörpers (3; 3a) angeordnet ist und daß, insbesondere zum Innendrehen, der für den Schneideinsatz bestimmte Schneidvorsprung (4; 4a) quer zur Längsachse (26; 26a) und der andere Schneidvorsprung (4; 4a) etwa in Längsrichtung des Schneidplattenhalters (2; 2a) und vorzugsweise von dessen Arbeitsende wegweisend liegt.

## Claims

1. Cutting tool with cutting bit holder (2, 2a) and a reversible cutting bit (1, 1a), which for the random, identically oriented cutting use is provided with two cutting projections (4, 4a) in cutting positions switched with respect to the cutting bit holder (2, 2a) and a body (3, 3a) with bit flat sides (15), which forms on the outer edge faces orienting bearing faces (17, 18; 17a, 18a), which are at an angle to one another, for orientation on the cutting bit holder (2, 2a) and is provided with cutting projections (4, 4a) which are at an angle to one another and which project in a view of the bit flat sides (15), and which in each case have an inner lateral edge face (9) and an outer lateral edge face (8, 8a) connected thereto in the longitudinal direction on the associated orienting bearing face (17, 17a) of the body (3, 3a), as well as cutting edges (12) located at the ends thereof, characterized in that the outer lateral edge face (8, 8a) of the at least two cutting projections (4, 4a) forms with the associated orienting bearing face (17) of the body (3, 3a) a through machining face and the orienting bearing faces (17, 18; 17a, 18a) are at right angles to the bit flat sides (15) or the bit median plane (6), i.e. the plane of symmetry between the bit flat sides (15) of the body (3) and are preferably in through flat form between both bit flat sides (15).

2. Cutting tool according to claim 1, characterized in that, in elevation of the bit flat sides (15) of the body (3), the outer lateral edge face (8) of the cutting projections (4) passes substantially approximately linearly into the associated orienting bearing face (17) of the body (3) and is in particular approximately in a plane therewith.

3. Cutting tool according to claims 1 or 2, characterized in that the end faces (7) of the cutting projections (4) are at right angles to the bit median plane (6) or to the bit flat sides.

4. Cutting tool according to one of the preceding claims, characterized in that the cutting projection (4, 4a), in elevation on the bit flat sides (15) of the body (3, 3a), is widened towards its outer end by a sloping construction of its inner and/or outer lateral edge face (8, 8a, 9) and preferably the outer lateral edge face (8a) passes under an obtuse angle of slightly less than 180° into the following orienting bearing face (17a) of the body (3a) and in particular the width of the cutting projection (4a) at its outer end is narrower than half the width of the body (3a) measured in the same direction.

5. Cutting tool according to one of the preceding claims, characterized in that with the cutting edge (12) are associated as orienting bearing faces (17, 17a; 18, 18a) an outer edge face positioned transversely and in particular at right angles to the median plane (5, 5a) of the associated cutting projection (4, 4a) on the side of the body (3, 3a) remote from said cutting projection (4, 4a) and a further outer edge face transversely positioned and particularly roughly at right angles to said outer edge face, the further outer edge face being adjacent to the inner lateral edge face (9) of the cutting projection (4, 4a) in the vicinity of its base.

6. Cutting tool according to one of the preceding claims, characterized in that the cutting projection (4, 4a) passes via a widened foot portion (16) into the body (3, 3a) and that preferably said foot portion (16) projects exclusively over the inner lateral edge face (9) of the remaining cutting projection (4, 4a) and/or a chip guide face (13) passes into said foot portion (16).

7. Cutting tool according to one of the preceding claims, characterized in that in the body (3, 3a) is provided a through bore (21, 21a), which is roughly at right angles to the bit median plane (6), for a cutting bit holder locking screw or the like and that the through bore (21, 21a) preferably has on both bit flat sides (15) bore portions (22, 22a) narrowing in an acute angled manner and conically to the bit median plane (6) of the body (3).

8. Cutting tool according to claim 7, characterized in that the orienting bearing faces (18, 18a) adjacent to the inner lateral edge faces (9) of the cutting projections (4, 4a) and/or the boundary edges (14, 14a) of the chip guide faces (13) remote from the cutting edges (12) are approximately tangential to the largest circumference of the through bore (21, 21a) and/or that said orienting bearing faces (18, 18a) pass approximately in the vicinity of the axial plane (24) of the through bore (21) located approximately at right angles to the particular orienting bearing face (18, 18a), into the widened foot portion (16) of the associated cutting projection (4, 4a).

9. Cutting tool according to one of the preceding claims, characterized in that the cutting projections (4, 4a) are under an angle between approximately 60 and 120° and in particular approximately 90° to one another and that the body (3, 3a) preferably has a square basic shape.

10. Cutting tool according to one of the preceding claims, characterized in that the cutting bit (1, 1a) is located on the cutting bit holder (2, 2a) with adjusting faces located in three space planes for the supporting of the orienting bearing faces (17, 18; 17a, 18a) of the body (3, 3a) and that in particular for internal turning the cutting projection (4, 4a) intended for the cutting insert is at right angles to the longitudinal axis (26, 26a) and the other cutting projection (4, 4a) is approximately in the longitudinal direction of the cutting bit holder (2, 2a) and is preferably directed away from its working end.

**Revendications**

1. Outil de coupe comprenant un porte-plaquette (2; 2a) et une plaquette réversible (1; 1a) prévue pour l'utilisation sélective sous la même orientation de deux saillies de coupe (4; 4a) à des positions de coupe obtenues par retournement de la plaquette par rapport au porte-plaquette (2; 2a) et qui possède un corps de base (3; 3a) avec de grandes faces planes (15), corps de base qui forme, sur des faces de côtés extérieurs, des faces d'application pour l'orientation (17, 18; 17a, 18a) disposées sous un angle l'une par rapport à l'autre et servant à l'orientation par rapport au porte-plaquette (2; 2a), et est pourvu des saillies de coupe (4; 4a) disposées sous un angle l'une par rapport à l'autre et dépassant du corps de base, dans une vue de dessus des grandes faces (15) de la plaquette, chacune des saillies de coupe présentant une face de côté latéral intérieure (9) et une face de côté latéral extérieure (8; 8a), se raccordant en direction longitudinale à la face d'application pour l'orientation (17; 17a) coordonnée du corps de base (3; 3a), de même que des arêtes coupantes (12) situées à leurs extrémités, caractérisé en ce que la face de côté latéral extérieure (8; 8a) de la saillie de coupe (4; 4a) concernée des saillies de coupe, au nombre de deux au moins, forme, avec la face d'application pour l'orientation (17) coordonnée du corps de base (3; 3a), une surface de façonnage continue, et les faces d'application pour l'orientation (17, 18; 17a, 18a) sont perpendiculaires aux grandes faces planes (15) ou au plan médian (6) de la plaquette, c'est-à-dire au plan de symétrie entre les grandes faces planes (15) du corps de base (3), et s'étendent de préférence de façon continue dans un plan entre les deux grandes faces planes (15) de la plaquette.

2. Outil de coupe selon la revendication 1, caractérisé en ce que - dans une vue de dessus des grandes faces planes (15) du corps de base (3) - la face de côté latéral extérieure (8) de la saillie de coupe se raccorde pour l'essentiel à peu près en ligne droite à la face d'application pour l'orientation (17) coordonnée du corps de base (3), et est en particulier située approximativement dans le même plan que cette face d'application.

3. Outil de coupe selon la revendication 1 ou 2, caractérisé en ce que les faces terminales (7) des saillies de coupe (4) sont perpendiculaires au plan médian (6) de la plaquette ou aux grandes faces planes (15) de la plaquette.

4. Outil de coupe selon une des revendications précédentes, caractérisé en ce que la saillie de coupe (4; 4a) - dans une vue de dessus des grandes faces (15) du corps de base (3; 3a) - s'élargit vers son extrémité extérieure en raison d'une conformation oblique de sa face de côté latéral intérieure et/ou de sa face de côté latéral extérieure (8, 8a; 9), la face de côté latéral extérieure (8a) se raccordant de préférence sous un angle obtus de peu inférieur à 180° à la face d'application pour l'orientation (17a) qui s'y raccorde du corps de base (3a) et, en particulier, la largeur de la saillie de coupe (4a) à l'extrémité extérieure de celle-ci étant inférieure à la moitié de la largeur, mesurée dans le même sens, du corps de base (3a).

5. Outil de coupe selon une des revendications précédentes, caractérisé en ce que les faces d'application pour l'orientation (17, 17a; 18, 18a) coordonnées à chaque arête coupante (12) sont constituées par une face de côté extérieur qui est transversale et en particulier perpendiculaire au plan médian (5; 5a) de la saillie de coupe (4; 4a) concernée et est située sur le côté du corps de base (3; 3a) éloigné de cette saillie de coupe (4; 4a), ainsi que par une face de côté extérieur supplémentaire qui est transversale, en particulier à peu près perpendiculaire à cette face de côté extérieur, cette face supplémentaire étant située à proximité de la face de côté latéral intérieure (9) de la saillie de coupe (4; 4a) dans la région de la base de celle-ci.

6. Outil de coupe selon une des revendications précédentes, caractérisé en ce que chaque saillie de coupe (4; 4a) se raccorde au corps de base (3; 3a) par un segment de pied élargi (16) et que, de préférence, ce segment de pied (16) dépasse exclusivement de la face de côté latéral intérieure (9) du reste de la saillie de coupe (4; 4a) et/ou une surface de guidage de copeaux (13) se prolonge jusque dans ce segment de pied (16).

7. Outil de coupe selon une des revendications précédentes, caractérisé en ce que le corps de base (3; 3a) présente un trou traversant (21; 21a) à peu près perpendiculaire au plan médian (6) de la plaquette et destiné à une vis de serrage ou un élément analogue du porte-plaquette, et que, de préférence, le trou traversant (21; 21a) possède des segments (22; 22a) situés sur les deux grandes faces planes (15) de la plaquette et se rétrécissant coniquement sous un angle aigu vers le plan médian (6) du corps de base (3).

8. Outil de coupe selon la revendication 7, caractérisé en ce que les faces d'application pour l'orientation (18; 18a) adjacentes aux faces de côté latéral intérieures (9) des saillies de coupe (4; 4a) et/ou les arêtes de délimitation (14; 14a) des surfaces de guidage de copeaux (13), arêtes qui sont éloignées des arêtes coupantes (12), sont à peu près tangentielles au plus grand pourtour du trou traversant (21; 21a) et/ou que ces faces d'application pour l'orientation (18; 18a) se raccordent, à peu près dans la région du plan axial (24) du trou traversant approximativement perpendiculaire à la face d'application pour l'orientation (18;

18a) en question, au segment de pied élargi (16) de la saillie de coupe (4; 4a) concernée.

9. Outil de coupe selon une des revendications précédentes, caractérisé en ce que les saillies (4; 4a) sont disposées l'une par rapport à l'autre sous un angle compris entre environ 60° et 120°, de préférence d'environ 90°, et que le corps de base (3; 3a) possède de préférence une forme de base carrée.

10. Outil de coupe selon une des revendications précédentes, caractérisé en ce que la plaquette (1; 1a) est disposée sur le porte-plaquette (2; 2a) avec des faces d'ajustement situées en trois plans spatiaux pour l'appui des faces d'application pour l'orientation (17, 18; 17a, 18a) du corps de base (3; 3a) et que, en particulier pour le tournage intérieur, la saillie (4; 4a) destinée à être utilisée pour la coupe, est disposée transversalement à l'axe longitudinal (26; 26a) et l'autre saillie de coupe (4; 4a) est disposée dans le sens de la longueur du porte-plaquette (2; 2a), de préférence en étant dirigée en sens contraire à l'extrémité de travail du porte-plaquette.

EP 0 144 073 B1

Fig. 2

Fig. 1

Fig. 4

Fig. 3